# EUROPEAN PATENT APPLICATION

(11) **EP 1 958 552 A1**
(43) Date of publication of application: **20.08.2008**
(21) Application number: 06830875.8
(22) Date of filing: 11.10.2006
(51) Int. Cl.: A47J 31/40

(54) **HEAD FOR INFUSION DISPENSING MACHINES**

(30) Priority: 13.10.2005 ES 200502501
(71) Applicant: Dual Coffee System S.L., 01015 Vitoria Alava (ES)
(72) Inventor: LAFUENTE URQUIZA, Ignacio, E-01015 Vitoria-Gasteiz (ES)
(74) Representative: Carvajal y Urquijo, Isabel
(86) International application number: PCT/ES2006/000566
(87) International publication number: WO 2007/042588

(57) **Abstract**

The invention relates to a head for infusion vending machines comprising a casing (1) defining a chamber (4) in which a piston (2) is housed and can travel by means of an operating lever (3). The chamber (4) has a front opening (5), through which the capsule containing the product to be distributed is introduced, which capsule will be housed between a bottom seat (8) of the chamber and a seat (11) of the piston. The lever (3) is connected to the piston (2) through an intermediate connecting rod (18)

## Description

### Field of the Invention

The present invention relates to a head for infusion vending machines, such as for coffee infusions, comprising a casing defining a cylindrical chamber in which a capsule containing ground coffee is located and through which capsule water is passed at a high temperature to obtain the coffee infusion.

### Background of the Invention

Machines are known for preparing coffee which comprise a casing defining a cylindrical chamber in which a piston is housed and can tightly travel, through an operating lever, between vending positions, in which a ground coffee dose is compressed, and a rest position, in which it is separated from said coffee dose to allow its extraction.

The portion of ground coffee is located on the bottom of the chamber, where it is compressed by the piston, in the vending position, while at the same time making water at a high temperature pass through said dose. In this type of machine it is necessary to supply ground coffee doses that can change in different vending moments, both regarding the amount of coffee supplied and in its grain size. These machines can furthermore have problems with cleaning due to the difficulty of completely eliminating the ground product once the coffee is distributed.

The use of capsules enclosing or containing the coffee dose needed to obtain the desired infusion is known to prevent this problem. These capsules are used in machines with a special constitution which have a chamber that is sized to house a capsule. Water is made to pass through this chamber at a high temperature, passing through the ground coffee contained in the capsule, the coffee infusion being obtained. The problem with this type of machines is that the hot water does not uniformly reach the entire coffee mass, which damages the quality of the obtained infusion.

### Description of the Invention

The object of the present invention is a head for coffee vending machines, in which the coffee is contained in capsules, with the necessary amount of coffee, such that there are no problems with cleaning, and eliminating particles in the vending chamber, nor any variation in the amounts or characteristics of the ground coffee. Furthermore, it is assured in the machine of the invention that the hot water reaches the entire ground coffee mass, since during the vending step the capsule containing coffee is compressed and enclosed in a housing, the only communications of which are the hot water entrance hole and the infusion outlet hole, located on the other side of the capsule.

Another advantage of the head of the invention is its simple, easy to handle and low-cost constitution, which also allows designing smaller coffee makers.

The head for coffee vending machines according to the invention comprises a casing defining a chamber in which a piston is tightly housed, which piston can travel by means of an operating lever between compression and release positions of the capsule containing coffee.

According to the invention the mentioned chamber has a front opening adjacent to the bottom in its wall, through which the capsule containing coffee is introduced, an inner seat at the bottom for said capsule, and an outlet conduit from the mentioned seat; whereas at the upper part it has assembled, above the piston, an operating lever which is linked to the casing according to a diametrical shaft and is connected to the piston by means of an intermediate connecting rod through which the piston is dragged in the vertical direction when the lever pivots between the upper and lower positions. The piston can vertically travel between an upper position, in which it is separate from the capsule containing coffee located in the seat at the bottom, and a lower vending position, in which it encloses and compresses the capsule, by actuating this lever. Therefore the lower base of the piston is provided with a seat that can be adapted on the capsule containing coffee located at the bottom of the chamber. A borehole traversing said piston and which is connected to a water feed conduit opens in this upper seat of the piston.

With the discussed constitution, to obtain a coffee infusion it is necessary to introduce in the chamber, through the front opening, a capsule containing coffee, for which purpose the piston will be located in its upper limit position. Once the capsule is in place, the operating lever is actuated to cause the piston to lower until it couples onto the capsule, pressing it, demarcating with the bottom of the chamber a sealed enclosure, having only the inlet conduit, through which hot water is fed, and the outlet conduit, through which the coffee infusion will be obtained.

The connecting rod connecting the lever with the piston is straight and linked at its ends to the lever and piston according to shafts which are located in the same diametrical plane as the linking shaft for linking the lever with the casing when the lever and piston are in their lower position.

### Brief Description of the Drawings

All the features, advantages and the operation of the invention will be better understood with the following description given in reference to the attached drawings in which a non-limiting embodiment is shown.

In the drawings:
Figure 1 is a perspective view of a head constituted according to the invention.
Figure 2 is a vertical section of the head, obtained according to sectional plane II-II of Figure 1, with the piston and operating lever in the lower position.
Figure 3 is a section similar to Figure 1, with the lever and piston in the upper position.
Figure 4 is an upper perspective view of the casing.
Figure 5 is an upper perspective view of the piston.
Figure 6 is a perspective view of the operating lever.

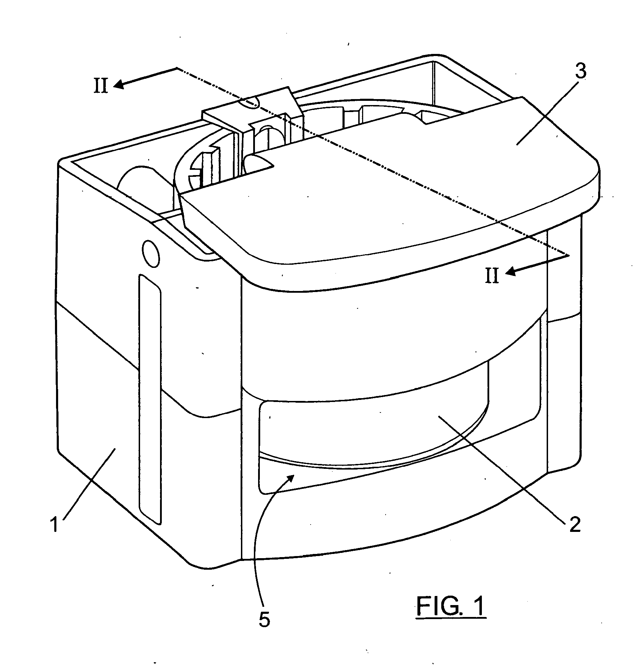

Figures 1 to 3 show the whole of the head of the invention, comprising a casing 1 inside which a piston 2 is housed, which can be actuated by means of a lever 3.

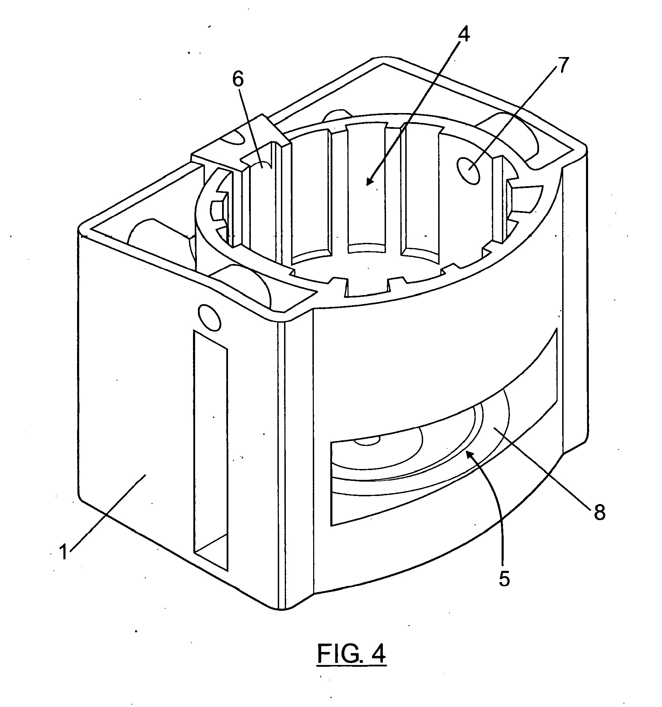

As can be seen in Figure 4, the casing 1 demarcates an internal vertical cylindrical chamber 4 which is open at its upper base and has a front opening 5 formed in its wall, adjacent to the bottom. In the position diametrically opposed to the opening 5, the chamber 4 has a vertical through groove 6 through which the water feed conduit is introduced. The casing 1 further has in the upper area and in diametrically opposed positions aligned horizontal boreholes 7 for the assembly of the operating lever, as will be explained below.

The bottom of the chamber 4 forms a seat 8 which can be reinforced by a metal receptacle and defines a concave surface matching the inner surface of the capsule containing coffee through which the infusion will be obtained.

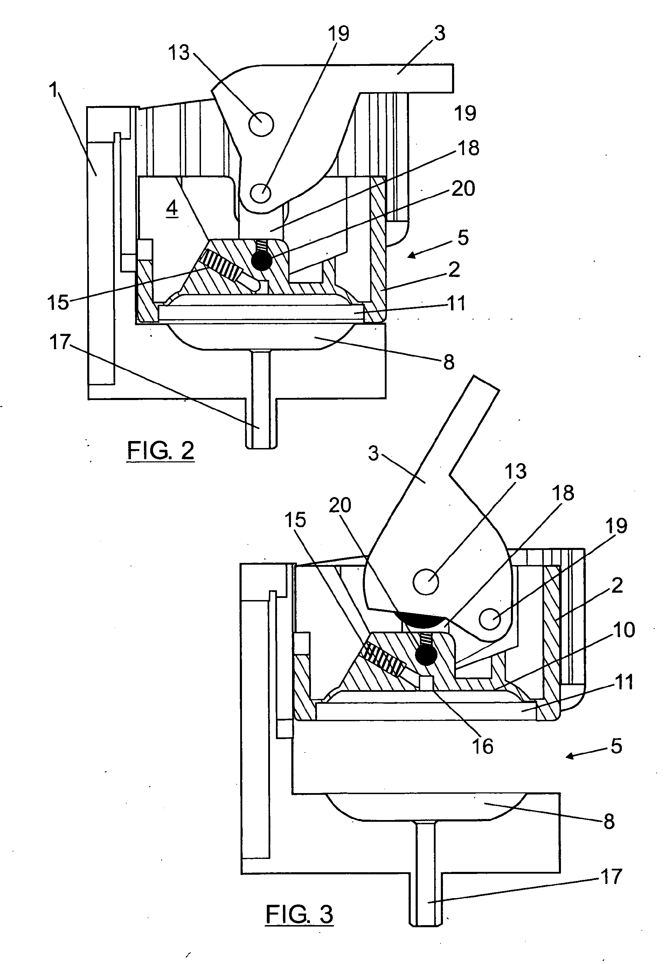

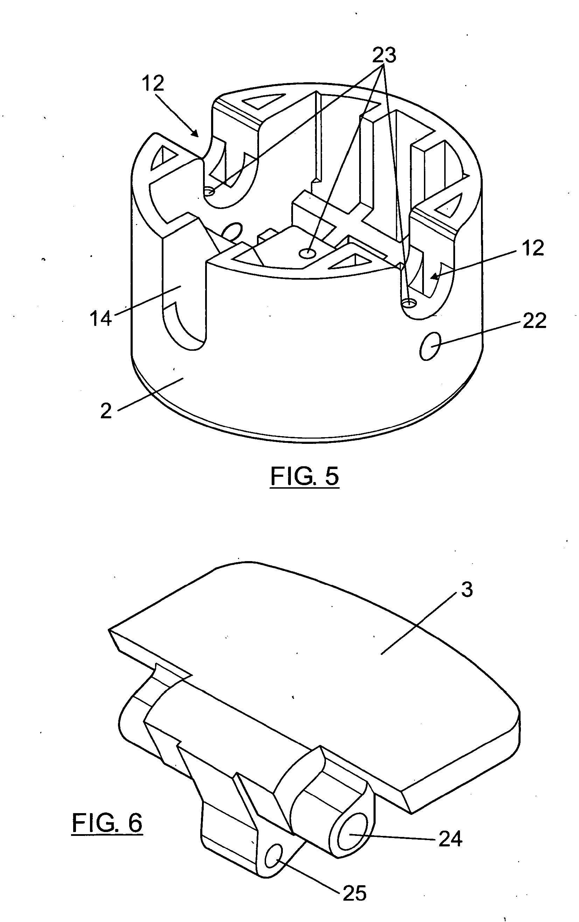

As can be seen in Figure 5, the piston 2 can be partially hollow after the upper base and after the lower base it has a seat 10, Figures 3 and 4, in which a metal receptacle 11, demarcating a concave surface matching the upper surface of the capsule containing coffee can be coupled.

As can be best seen in Figure 5, the piston 2 has two opposing notches 12 in its wall, through which notches the linking shaft 13, Figures 3 and 4, of the operating lever 3, which is assembled between the holes 7 of the casing, Figure 4, passes. These notches 12 will be deep enough so that they allow the travel or stroke of the piston, without colliding with the linking shaft 13 of the lever 3.

The piston 2 further has in its wall, Figure 5, an axial notch 14 through which the water feed conduit passes, introduced through the vertical groove 6 of the casing, which will be connected to a borehole 15 of the piston, Figures 3 and 4, ending in a vertical section 16 opening through the seat 10 and receptacle 11.

An axial conduit 17, Figures 2 to 4, departs from the seat 8 of the chamber of the casing for the exit of the infusion.

As can be seen in Figures 2 and 3, the piston 2 and the lever 3 are connected by means of a connecting rod 18 which is linked at one end to the lever 3 by means of shaft 19, whereas at the opposite end it is linked to the piston 2 according to shaft 20.

In the position shown in Figure 3, the lever 3 and piston 2 are in their upper limit position in which a capsule containing ground coffee can be introduced through the opening 5, placing said capsule on the lower seat 8 of the chamber 4. Then the lever 3 can be actuated in the direction of arrow A in Figure 3, making it rotate about shaft 13 until reaching the position of Figure 2. During this movement, the lever 3 causes; through the connecting rod 18, the downward vertical travel of the piston 2, until reaching the lower limit position of Figure 2, in which seats 8 and 11 define a sealed compartment, in which the capsule containing coffee is housed. Hot water will reach this sealed compartment through the conduit 15 and the coffee infusion will exit through the lower conduit 17. In the position of Figure 2, shafts 13, 18 and 20 are located in the same diametrical plane of the cylindrical chamber 4.

Figure 5 shows the aligned boreholes 22 through which the linking shaft 20 for linking with the connecting rod 18 is introduced. This shaft can be locked by means of screws threaded in the boreholes 23.

As can be seen in Figure,6, the operating lever 3 has a passage or parallel boreholes 24 and 25 through which linking shafts 13 and 19 for linking with casing 1 and with the connecting rod 18 pass, respectively.

As can be seen, the head of the invention has a simple constitution and operation, with a low number of parts, which allows reducing costs and the risks of failures.

Although the head in the described example is applied for obtaining coffee, it could also be used to obtain another type of infusions.

## Claims

1. A head for infusion vending machines comprising a casing defining a chamber in which a piston is tightly housed, which piston can travel by means of an operating lever, **characterized in that** the mentioned chamber has a front opening adjacent to the bottom in its wall, through which a capsule containing coffee or a product to be distributed is introduced, a seat at the bottom on which the mentioned capsule is located and an outlet conduit after said seat, whereas at the upper part it has assembled, above the piston, the mentioned operating lever which is linked to the casing according to a diametrical shaft and is connected to the piston by means of an intermediate connecting rod through which the piston is dragged in the vertical direction when the lever pivots between upper and lower positions; the lower base of said piston being provided with a seat that can be coupled on the capsule where a borehole traversing said piston and which is connected to a water feed conduit opens.

2. A head according to claim 1, **characterized in that** the linking shaft between the lever and the casing and the linking shafts for linking the connecting rod with said lever and the piston are located in the same diametrical plane of the chamber when the lever and the piston are in their lower position.
